# FASCICULE DE BREVET EUROPEEN

(11) **EP 1 063 161 B1**
(45) Date de publication et mention de la délivrance du brevet: **01.10.2003**
(21) Numéro de dépôt: 00401043.5
(22) Date de dépôt: 14.04.2000
(51) Int. Cl.: B62M 3/08

(54) **Pédale automatique de cycle**
Automatisches Pedal für Fahrrad
Automatic pedal for bicycle

(30) Priorité: 25.06.1999 FR 9908130
(43) Date de publication de la demande: 27.12.2000
(73) Titulaire: Look Cycle International, 58000 Nevers (FR)
(72) Inventeur: Peyre, Henri, 58270 Saint Benin d'Azy (FR); Vassault, Damien, 13100 Aix en Provence (FR)
(74) Mandataire: Boutin, Antoine

(56) Documents cités:
- EP-A- 0 359 845
- EP-A- 0 393 586
- US-A- 5 381 708

## Description

L'invention concerne une pédale automatique de cycle pour la fixation rapide de la chaussure d'un cycliste sur la pédale.

On connaît des pédales de ce genre comportant un corps de pédale muni d'une conformité d'engagement d'une plaque de retenue de chaussure de bicyclette et d'un crochet arrière basculant de retenue. Ce crochet arrière est précontraint par un moyen élastique qui habituellement est constitué d'au moins un ressort qui peut être du type hélicoïdal de compressions, de torsion, d'extension ou à lame. Une pédale automatique de ce type est décrite dans le document US-A-5 381 708. La pédale comporte par ailleurs souvent un dispositif à came ou à vis permettant le réglage de la tension du moyen élastique.

Le corps de pédale est en outre pourvu d'un alésage taraudé transversal pour la fixation au corps d'un axe relié à une manivelle du pédalier de la bicyclette. Cet axe est monté dans un palier logé dans le corps de pédale et permet la rotation de la pédale autour de l'axe lors du pédalage.

Ainsi, ces pédales comportent en général un nombre relativement important de pièces qui nécessitent également certains usinages, en particulier pour la mise en oeuvre du taraudage de l'alésage pour la fixation de l'axe de pédale qui repose dans des paliers relativement encombrants et chers à fabriquer puisqu'ils comportent souvent des roulements à billes ou à aiguilles.

Un but de l'invention est de proposer un moyen simple de fixation de l'axe au corps de pédale permettant de supprimer le taraudage nécessaire sur les pédales classiques de ce genre.

Un autre but de l'invention est de proposer une pédale comportant un nombre restreint de pièces et qui par conséquent est moins chère à fabriquer par rapport à ce qui est le cas des pédales actuellement sur le marché.

Un autre but de l'invention est de proposer une pédale extrêmement simple et fiable au niveau du crochet arrière basculant de retenue et qui peut comporter un moyen simple et efficace pour le réglage de la tension du moyen élastique commandant le basculement du crochet arrière.

Encore un autre but de l'invention est de proposer une pédale dans laquelle les pièces d'usure peuvent facilement être remplacées.

L'objet de l'invention est une pédale automatique de cycle, du type comportant un corps de pédale muni d'un crochet avant fixe d'engagement d'une plaque de retenue fixée sous une chaussure de bicyclette, et d'un crochet arrière d'enclenchement porté par un levier basculant articulé sur un support dans le corps de pédale tout en étant constamment sollicité par un moyen élastique vers la position de retenue du crochet arrière, les crochets avant et amère étant aptes à coopérer pour maintenir la plaque de retenue de la chaussure contre une surface d'appui ménagée sur une face supérieure de la pédale, caractérisée en ce que le moyen élastique comporte une branche élastique courbe coopérant avec ledit levier, et en ce que ladite branche élastique courbe est associée à un moyen de fixation par encliquetage sur un axe de pédale apte à être relié à une manivelle de pédalier.

Selon d'autres caractéristiques de l'invention :
- le corps de pédale et la branche élastique courbe sont en une seule pièce en une matière synthétique ;
- la branche élastique courbe est une lame ou un organe en acier à ressort ou métal similaire ;
- la branche élastique courbe et le moyen de fixation par encliquetage sont en une seule pièce en métal dont l'une des extrémités est en appui contre le levier et l'autre extrémité est reliée au corps de pédale ;
- le moyen de fixation par encliquetage du corps de pédale à l'axe est en matière synthétique et est surmoulé sur la branche élastique ;
- le moyen élastique constitue avec le moyen de fixation par encliquetage un ensemble détachable encliquetable simultanément sur l'axe de pédale et sur le corps de pédale ;
- la branche élastique présente une conformité d'extrémité dont la distance à une extrémité du levier est réglable pour ajuster la tension de celui-ci ;
- ladite distance est réglable à l'aide d'une came ou d'une vis de réglage vissée dans l'extrémité de la branche élastique et prenant appui sur ladite extrémité du levier ;
- l'ensemble détachable comporte une surface d'appui apte à venir en contact avec la plaque de retenue de chaussure de bicyclette ;
- l'axe de pédale est pourvue d'une gorge recevant le moyen de fixation par encliquetage de manière à définir le jeu axial de l'axe ;
- l'axe de pédale est pourvu de deux paliers lisses disposés de part et d'autre de ladite gorge.

L'invention sera maintenant décrite plus en détails à l'aide d'un exemple non limitatif de plusieurs modes de réalisation de la pédale selon l'invention en référence aux dessins annexés sur lesquels :
- La figure 1 est une vue éclatée en perspective d'une pédale selon un premier mode de réalisation de l'invention ;
- La figure 2 est une vue en perspective d'une coupe longitudinale de la pédale de la figure 1 ;
- La figure 3 est une vue en coupe longitudinale d'une pédale selon un autre mode de réalisation de l'invention comprenant un dispositif de réglage de la tension du moyen élastique associé au crochet arrière ;
- La figure 4 est une vue en coupe longitudinale d'une pédale selon un autre mode de réalisation de l'invention ;
- La figure 5 est une vue en coupe longitudinale d'une pièce de la figure 4 ;
- La figure 6 est une variante de réalisation du mode de réalisation de la pièce de la figure 5 ;
- La figure 7 est une vue en coupe longitudinale d'une pédale selon un autre mode de réalisation de l'invention ;
- La figure 8 est une vue en coupe longitudinale d'une pédale selon un autre mode de réalisation de l'invention ;
- La figure 9 est une vue en coupe longitudinale d'une pédale selon un autre mode de réalisation de l'invention ; et
- La figure 10 est une vue en perspective d'une ébauche pour la fabrication de l'élément élastique de la figure 9.

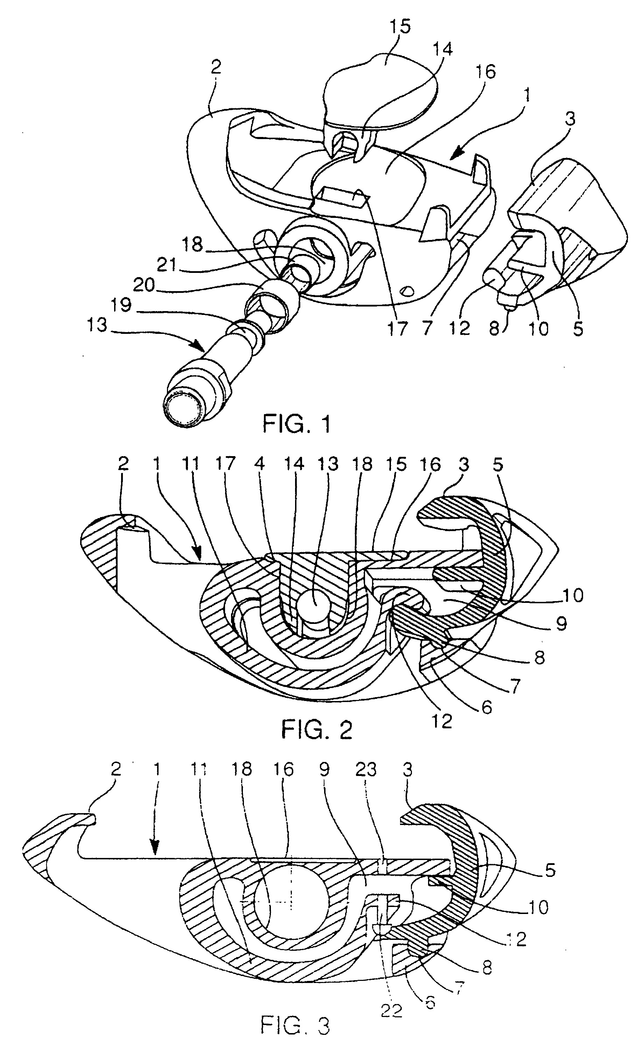

Les figures 1 et 2 illustrent un premier mode de réalisation de la pédale selon l'invention. Cette pédale comporte un corps de pédale 1 muni d'un crochet avant fixe 2 et d'un crochet basculant arrière 3. Une plaque de retenue fixée sous une chaussure de cycliste (non représentée), peut s'engager sous le crochet avant 2 pour être fixée par encliquetage entre les crochets contre une surface d'appui 4 sur la face supérieure du corps de pédale.

Le crochet arrière 3 est porté par un levier 5 monté basculant sur un support 6 du corps de pédale 1. Ce support comporte une rainure cylindrique 7 recevant une nervure cylindrique 8 placée sur la partie inférieure du levier 5. La nervure 8 est complémentaire de la rainure 7 de sorte que ces deux éléments forment une articulation entre le levier 5 et le support 6.

Le levier 5 a la forme générale d'un E monté basculant dans un évidement 9 ménagé à l'arrière du corps de pédale 1. La branche intermédiaire 10 du levier 5 vient, lorsque le levier est sollicité vers sa position de retenue, en butée contre la paroi interne supérieure de l'évidement. Le levier pourrait naturellement avoir une autre forme et comporter un épaulement venant en butée contre cette même paroi.

Le levier 5 est constamment sollicité vers sa position de retenue par un moyen élastique constitué par une lame courbe 11 dont l'extrémité est recourbée dans l'autre sens pour former un crochet 12 qui coopère avec le levier basculant 5.

Cette lame courbe 11 et le support 6 du levier basculant 5 sont venus de moulage avec le corps de pédale 1. Par conséquent, le matériau utilisé doit être choisi pour donner une élasticité suffisante, ce que l'on retrouve par exemple chez certaines matières synthétiques.

La lame courbe 11 est à son extrémité opposée à l'extrémité 12 associée à un moyen d'encliquetage du corps de pédale 1 sur un axe de pédale 13. Le moyen d'encliquetage comporte un clips 14 fixé sous un plateau 15 placé dans un logement de forme complémentaire ménagé dans la face supérieure du corps de pédale 1. Ce plateau 15 constitue par ailleurs au moins une partie de la surface d'appui 4 de la plaque de retenue de la chaussure de cycliste.

Le clips 14 s'étend à travers une fente 17 pour faire saillie dans un alésage lisse 18 de réception de l'axe de pédale 13. Le clips 14 s'étend ainsi perpendiculairement à l'axe de l'alésage et est adapté pour être disposé par encliquetage dans une gorge 19 de l'axe de pédale pour bloquer celui-ci axialement. L'axe 13 est pour la rotation du corps de pédale 1 guidé dans deux paliers lisses 20 et 21 enfilés sur l'axe de pédale 13 et disposés de part et d'autre de la gorge 19 de celui-ci de manière à définir avec cette gorge le jeu axial de l'axe.

L'ensemble formant axe de pédale est ainsi constitué de pièces simples et peu nombreuses. Le jeu axial est maîtrisé par une seule pièce, c'est-à-dire le clips 14 qui peut, avec le plateau 15 qui le porte, être facilement changé en cas d'usure. Grâce à cet agencement, le taraudage dans l'alésage de l'axe est ainsi supprimé.

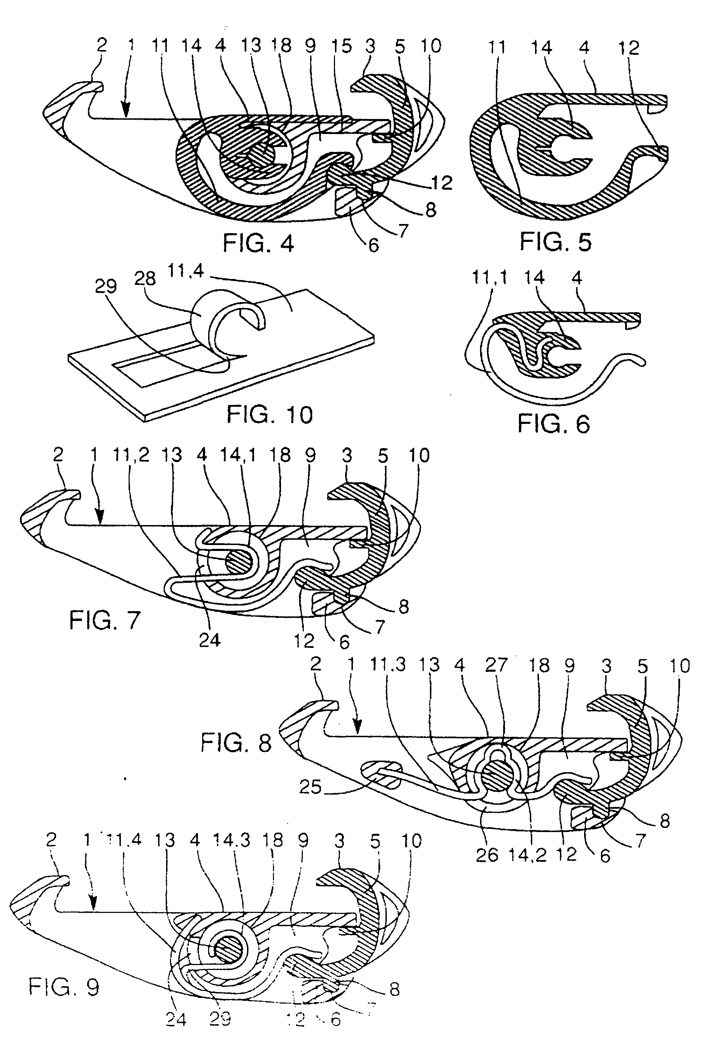

Dans les figures 3 à 9, les éléments analogues à ceux déjà décrits portent les mêmes références.

La figure 3 montre schématiquement une variante de la pédale selon le premier mode de réalisation décrit en référence aux figures 1 et 2. Dans cette variante, la lame élastique courbe 11 est en outre pourvue d'un dispositif de réglage de sa tension. Ce dispositif comporte une vis de réglage 22 reliant l'extrémité 12 de la lame courbe 11 au levier basculant 5. La tige filetée de la vis est vissée dans un trou taraudé à l'extrémité 12 de la lame 11, alors que sa tête repose contre l'extrémité inférieure du levier 5. Le pied de la vis est pourvu d'une fente (non représentée) permettant le vissage de la vis en introduisant un petit tournevis par un trou traversant 23 effectué dans la face supérieure du corps de pédale et aligné sur la vis 22. Il est ainsi possible de régler la distance entre l'extrémité 12 de la lame courbe 11 et l'extrémité inférieure du levier 5 pour tendre plus ou moins la lame en fonction de la dureté d'ouverture souhaitée des crochets.

Les figures 4 et 5 montrent un autre mode de réalisation dans lequel la lame élastique 11 n'est plus venue de moulage avec le corps de pédale 1, mais constitue un ensemble détachable avec le moyen de fixation par encliquetage 14 qui maintient l'axe de pédale 13 axialement. Cet ensemble, qui est en matière synthétique, est montré séparément à la figure 5. La surface d'appui 4 fait avantageusement partie de cet ensemble qui par ailleurs est maintenu en place par des appuis sur le corps de pédale. Ces appuis peuvent avantageusement avoir la forme de moyens d'encliquetage pour obtenir un encliquetage simultané sur l'axe de pédale 13 et sur le corps de pédale 1.

La figure 6 montre une variante du mode de réalisation des figures 4 et 5 dans laquelle la branche élastique courbe est constituée par une lame en acier à ressort 11.1 ou similaire sur laquelle une pièce en matière synthétique comprenant le moyen de fixation par encliquetage 14 et la surface d'appui 4 est surmoulée.

La figure 7 montre un autre mode de réalisation dans lequel la branche élastique 11.2 et le moyen de fixation sous forme d'un clips 14.1 sont constitués d'une seule lame métallique pliée. Pour le montage, on insère d'abord le clips 14 dans l'alésage 18 par une ouverture latérale 24 communiquant avec celui-ci et ensuite on introduit l'axe de pédale 13 qui est bloqué axialement après que le clips 14.1 est entré dans la gorge 19 de l'axe.

La figure 8 montre un autre mode de réalisation dans lequel la branche élastique 11.3 et le moyen de fixation sous forme d'un clips 14.2 sont constitués d'une seule lame métallique ou d'un seul fil métallique plié. L'extrémité de cette lame ou de ce fil opposée à l'extrémité 12 en contact avec le levier 5 est maintenue dans un évidement du corps de pédale ayant une forme complémentaire de celle de la lame ou du fil. L'organe élastique est mise en place en introduisant sa partie centrale dans l'alésage 18 par une ouverture 26 tournée vers le bas et après l'introduction de l'axe de pédale dans l'alésage et sa fixation par encliquetage, la lame ou le fil prend appui contre la paroi interne de l'alésage grâce à un petit pli 27 formant une protubérance vers le haut.

Finalement, la figure 9 montre encore un autre mode de réalisation dans lequel la branche élastique 11.4 et le moyen de fixation sous forme d'un clips 14.3 sont constitués d'une seule lame métallique qui est découpée sur une partie pour former une languette 28. La figure 10 montre cette pièce sous forme d'une ébauche. L'une des extrémités de la branche est fixée dans le corps de pédale 1, alors que son extrémité opposée 12 constitue un crochet reposant contre le levier 5.

La languette 28 constitue un clips introduit dans l'alésage 18 par une ouverture latérale 24 et qui est destiné à coopérer par encliquetage avec la gorge 19 de l'axe de pédale 13 lorsque celui-ci est introduit dans l'alésage 18.

La zone de pli 29 de la languette formant clips 28 est très souple de sorte que la déformation de la branche élastique 11.4 sous l'effet du levier 5 n'interfère pas sur la rotation de l'axe maintenue axialement par le clips.

De nombreuses variantes peuvent être envisagées sans pour autant sortir du cadre de l'invention.

## Revendications

1. Pédale automatique de cycle comportant un corps de pédale (1) muni d'un crochet avant fixe (2) d'engagement d'une plaque de retenue fixée sous une chaussure de bicyclette, et d'un crochet arrière d'enclenchement (3) porté par un levier basculant (5) articulé sur un support (6) dans le corps de pédale (1) tout en étant constamment sollicité par un moyen élastique (11) vers la position de retenue du crochet arrière, les crochets avant et arrière (2, 3) étant aptes à coopérer pour maintenir la plaque de retenue de la chaussure contre une surface d'appui (4) ménagée sur une face supérieure de la pédale, **caractérisée en ce que** le moyen élastique comporte une branche élastique courbe (11) coopérant avec ledit levier (5), et **en ce que** ladite branche élastique courbe (11) est associée à un moyen de fixation par encliquetage (14) sur un axe de pédale (13) apte à être relié à une manivelle de pédalier.

2. Pédale automatique de cycle selon la revendication 1, **caractérisée en ce que** le corps de pédale (1) et la branche élastique courbe (11) sont en une seule pièce en une matière synthétique.

3. Pédale automatique de cycle selon la revendication 1, **caractérisée en ce que** la branche élastique courbe (11) est une lame ou un organe en acier à ressort ou métal similaire.

4. Pédale automatique de cycle selon la revendication 1 ou 3, **caractérisée en ce que** la branche élastique courbe (11) et le moyen de fixation par encliquetage (14) sont en une seule pièce en métal dont l'une (12) des extrémités est en appui contre le levier (5) et l'autre extrémité est reliée au corps de pédale (1).

5. Pédale automatique de cycle selon la revendication 3, **caractérisée en ce que** le moyen de fixation par encliquetage (14) du corps de pédale (1) à l'axe (13) est en matière synthétique et est surmoulé sur la branche élastique (11).

6. Pédale automatique de cycle selon l'une quelconque des revendications 1, 3 ou 5, **caractérisée en ce que** le moyen élastique (11) constitue avec le moyen de fixation par encliquetage (14) un ensemble détachable encliquetable simultanément sur l'axe de pédale (13) et sur le corps de pédale (1).

7. Pédale automatique de cycle selon l'une quelconque des revendications précédentes, **caractérisée en ce que** la branche élastique (11) présente une conformité d'extrémité (12) dont la distance à une extrémité du levier (5) est réglable pour ajuster la tension de celui-ci.

8. Pédale automatique de cycle selon la revendication 7, **caractérisée en ce que** ladite distance est réglable à l'aide d'une came ou d'une vis de réglage (22) vissée dans l'extrémité (12) de la branche élastique (11) et prenant appui sur ladite extrémité du levier (5).

9. Pédale automatique de cycle selon la revendication 6, **caractérisée en ce que** l'ensemble détachable comporte une surface d'appui (4) apte à venir en contact avec la plaque de retenue de chaussure de bicyclette.

10. Pédale automatique de cycle selon l'une quelconque des revendications précédentes, **caractérisée en ce que** l'axe de pédale (13) est pourvue d'une gorge (19) recevant le moyen de fixation (14) par encliquetage de manière à définir le jeu axial de l'axe (13).

11. Pédale automatique de cycle selon la revendication 10, **caractérisée en ce que** l'axe de pédale (13) est pourvu de deux paliers lisses (20, 21) disposés de part et d'autre de ladite gorge (19).

## Patentansprüche

1. Automatisches Pedal für Fahrräder mit einem Pedalkörper (1), der mit einem feststehenden, vorderen Bindungshaken (2) für den Eingriff einer Halteplatte, die unter einem Fahrradschuh befestigt ist, versehen ist, sowie mit einem hinteren Einschnapphaken (3), der an einem Kipphebel (5) sitzt, der gelenkig auf einer Auflage (6) in dem Pedalkörper (1) angebracht ist und dabei ständig durch ein Federmittel (11) in die Festhaltestellung des hinteren Hakens gedrückt wird, wobei der vordere und der hintere Haken (2, 3) geeignet sind, zusammenzuwirken, um die Halteplatte des Schuhs an einer Anlagefläche (4) zu halten, die an einer Oberseite des Pedals ausgeführt ist,
**dadurch gekennzeichnet,**
**dass** das Federmittel aus einem gebogenen, federnden Schenkel (11) besteht, der mit diesem Hebel (5) zusammenwirkt, und dass dieser gebogene, federnde Schenkel (11) mit einem Befestigungsmittel zum Einrasten (14) an einer Pedalachse (13) verbunden ist, die mit einer Pedalkurbel verbunden werden kann.

2. Automatisches Pedal für Fahrräder nach Anspruch 1,
**dadurch gekennzeichnet,**
**dass** der Pedalkörper (1) und der gebogene, federnde Schenkel (11) in einem Stück aus einem synthetischen Werkstoff bestehen.

3. Automatisches Pedal für Fahrräder nach Anspruch 1,
**dadurch gekennzeichnet,**
**dass** der gebogene, federnde Schenkel (11) ein Plättchen oder ein Organ aus Federstahl oder einem ähnlichen Metall ist.

4. Automatisches Pedal für Fahrräder nach Anspruch 1 oder 3,
**dadurch gekennzeichnet,**
**dass** der gebogene, federnde Schenkel (11) und das Befestigungsmittel zum Einrasten (14) in einem Stück aus Metall bestehen, dessen eines Ende (12) sich in Anlage an dem Hebel (5) befindet und dessen anderes Ende mit dem Pedalkörper (1) verbunden ist.

5. Automatisches Pedal für Fahrräder nach Anspruch 3,
**dadurch gekennzeichnet,**
**dass** das Befestigungsmittel zum Einrasten (14) des Pedalkörpers (1) an der Achse (13) aus einem synthetischen Werkstoff besteht und auf den gebogenen, federnden Schenkel (11) aufgeformt ist.

6. Automatisches Pedal für Fahrräder nach einem der Ansprüche 1, 3 oder 5,
**dadurch gekennzeichnet,**
**dass** das Federmittel (11) mit dem Befestigungsmittel zum Einrasten (14) zusammen eine abnehmbare Gesamtanordnung bildet, die zugleich an der Pedalachse (13) und an dem Pedalkörper (1) einrasten kann.

7. Automatisches Pedal für Fahrräder nach einem der vorherigen Ansprüche,
**dadurch gekennzeichnet,**
**dass** der federnde Schenkel (11) eine Konformität des Endes (12) aufweist, dessen Abstand zu einem Ende des Hebels (5) einstellbar ist, um dessen Spannung einzustellen.

8. Automatisches Pedal für Fahrräder nach Anspruch 7,
**dadurch gekennzeichnet,**
**dass** dieser Abstand mittels einer Nocke oder einer Einstellschraube (22), die in das Ende (12) des federnden Schenkels (11) eingeschraubt ist und in Anlage an dem genannten Ende des Hebels (5) kommt, eingestellt werden kann.

9. Automatisches Pedal für Fahrräder nach Anspruch 6,
**dadurch gekennzeichnet,**
**dass** die abnehmbare Gesamtanordnung eine Anlagefläche (4) aufweist, die geeignet ist, in Berührung mit der Halteplatte für den Fahrradschuh zu kommen.

10. Automatisches Pedal für Fahrräder nach einem der vorherigen Ansprüche,
**dadurch gekennzeichnet,**
**dass** die Pedalachse (13) mit einer Auskehlung (19) versehen ist, die das Befestigungsmittel zum Einrasten (14) dergestalt aufnimmt, dass sie das axiale Spiel der Achse (13) bestimmt.

11. Automatisches Pedal für Fahrräder nach Anspruch 10,
**dadurch gekennzeichnet,**
**dass** die Pedalachse (13) mit zwei Gleitlagern (20, 21) versehen ist, die beiderseits der Auskehlung (19) angeordnet sind.

## Claims

1. Automatic cycle pedal comprising a pedal body (1) provided with a fixed front hook (2) for engagement with a retaining plate fixed below a bicycle shoe, and a rear engaging hook (3) carried by a swinging lever (5) articulated to a support (6) in the pedal body (1) while being continuously urged by a resilient means (11) toward the retaining position of the rear hook, the front and rear hooks (2, 3) being adapted to cooperate to maintain the retaining plate of the shoe against a bearing surface (4) provided on an upper surface of the pedal, **characterised in that** the resilient means comprises a curved resilient leg (11) cooperating with said lever (5), **in that** said curved resilient leg (11) is associated with a snap-on securing means (14) for securing onto a pedal axle (13) adapted to be connected to a pedal crank.

2. Automatic cycle pedal according to claim 1, **characterised in that** the pedal body (1) and the curved resilient leg (11) are made of a synthetic material in one piece.

3. Automatic cycle pedal according to claim 1, **characterised in that** the curved elastic leg (11) is a blade or a spring member made of steel or similar metal.

4. Automatic cycle pedal according to claim 1 or 3, **characterised in that** the curved elastic leg (11) and the snap-on securing means (14) are made of metal in one piece, of which one (12) of the ends rests against the lever (5) and the other end is connected to the pedal body (1).

5. Automatic cycle pedal according to claim 3, **characterised in that** the snap-on securing means (14) for securing the pedal body (1) to the axle (13) is made of synthetic material and is moulded onto the resilient leg (11).

6. Automatic cycle pedal according to any one of claims 1, 3 or 5, **characterised in that** the resilient means (11), with the snap-on securing means (14), constitutes a detachable assembly which can be snapped simultaneously onto the pedal axle (13) and the pedal body (1).

7. Automatic cycle pedal according to any one of the preceding claims, **characterised in that** the resilient leg (11) has a shaping of the end (12), of which the distance to one end of the lever (5) can be adjusted to regulate the tension thereof.

8. Automatic cycle pedal according to claim 7, **characterised in that** said distance can be adjusted with the aid of a cam or an adjusting screw (22) screwed into the end (12) of the resilient leg (11) and resting on said end of the lever (5).

9. Automatic cycle pedal according to claim 6, **characterised in that** the detachable assembly comprises a bearing surface (4) adapted to come into contact with the retaining plate of the bicycle shoe.

10. Automatic cycle pedal according to any one of the preceding claims, **characterised in that** the pedal axle (13) is provided with a throat (19) receiving the snap-on securing means (14) so as to define the axial play of the axle (13).

11. Automatic cycle pedal according to claim 10, **characterised in that** the pedal axle (13) is provided with two smooth bearings (20, 21) disposed on either side of said throat (19).
